# EUROPEAN PATENT APPLICATION

(11) **EP 1 526 334 A1**
(43) Date of publication of application: **27.04.2005**
(21) Application number: 03380239.8
(22) Date of filing: 22.10.2003
(51) Int. Cl.: F24C 15/10, H05B 3/74, A47J 37/06

(54) **Ceramic hotplate**

(71) Applicant: Eurostoves, S.L., 08269 Sant Marti de Torruella (Barcelona) (ES)
(72) Inventor: Casas Camprubi, Jordi, 08269 Sant Marti De Torruella Barcelona (ES)
(74) Representative: Esteban Perez-Serrano, Maria Isabel

(57) **Abstract**

The ceramic hotplate is built in a cast metal frame, preferably in aluminium material and with one or several layers of PTFE non-stick coating, as well as in a single piece or with separate handles, in a stepped construction (1) which configures a tubular length (2), of circular section which acts as internal side of a channel (3) for collection of the liquid residues (4) from the pieces of food (5) cooked thereon, this tubular length (2) being extended upwards in a diversity of flukes (6), preferably trapezoidal and equidistant, on which a ceramic sheet (7) rests, leaving some intermediate circular ring sectors (8), for exchange of the hottest air with the exterior from the space internal to the tubular length (2).

## Description

### OBJECT OF THE INVENTION

The present invention relates to a ceramic hotplate, of among the ceramic hotplates applicable to, among others, electric or gas ceramic hobs.

This invention is characterised in a special construction of the hotplate, in a recipient formed by two main pieces, one in a stepped frame which incorporates an internal tubular section which acts as the side of an internal channel for the collection of liquid residues, extended in a diversity of upper flukes to support the other main piece, a ceramic sheet.

The flukes are facing some groups of recesses on the other side of the channel, at a different level, the highest one being that which incorporates a perforation for passing the wing nut for securing the ceramic sheet, whilst the deepest acts as a deposit for these residues.

### BACKGROUND OF THE INVENTION

Ceramic hotplates are extensively known, there being on the market both gas and electric ones, with equivalent installed powers of around 2000 W, as well as in diverse configurations, rectangular, oval and circular.

Their proliferation as a method of healthy cooking facilitates cooking for people with speciflc needs or problems, such as: those with high blood pressure, the obese, athletes, vegetarians, celiac patients and many other cases and uses.

Pertaining to this same applicant is utility model number 1048836, entitled: "Ceramic hotplate", to cover identical functions to the object of the invention which is now presented, in a metallic frame with a large central perforation provided with an non-stick plastic coating, to receive the aforesaid ceramic hotplate, with securing fins and a layer of alimentary silicone, mounted intermediately between the central sheet and the metallic body.

In spite of the unquestionable benefits of this type of hotplate, given the form of vertical transmission of heat from the sheet, namely, exclusively transversal thereto and through the known circular configuration of the so-called "rings" of the gas or electric hobs, independently of whether or not they incorporate this ceramic upper sheet, only the circular hotplates have a real application.

On the other hand the silicones, the same as the Teflon of alimentary type, degrade too rapidly, compelling the maximum working temperature to be limited, and also the permanent presence of the fat produced by some foodstuffs during their cooking is a further impediment.

The applicant is unaware of the existence of hotplates which resolve the problem described above, with the simplicity and effectiveness of the invention disclosed herein.

### DESCRIPTION OF THE INVENTION

The present invention relates to a ceramic hotplate, of among all those ceramic hotplates applicable preferably to the upper surface of the ceramic hobs, be they electric or gas, although the direct application thereof is not discarded to hobs provided with any type of energy source and without that coating material as long as the supporting surface is minimally adapted to the base of this hotplate, for example, to the hobs with a sheet steel top, of those termed "economical'', to those with gratings or, ultimately, to a conventional accessory, like a support with feet adjustable in height.

This invention is characterised in a special construction of the hotplate, in a metallic frame with stepped configuration which, from inside to outside, incorporates an internal tubular length of circular section, which acts as internal side of a channel for collection of the liquid residues, internal to the body of the hotplate, this tubular length being extended upwards in a diversity of flukes, preferably equidistant.

The reason for the presence of these flukes is that the transmission of heat takes place practically by convection and for this a minimum recirculation of hot air is required, which is obtained by the exchange of this air with the exterior, carried out through the exchange vents or circular ring sectors defined between the fluke side, edge of the tubular length and upper covering, in the ceramic sheet.

In the tests carried out with a direct gas fire proceeding from a heating element of habitual maximum diameter of 10 or 12 cm, in the prototype in which the sheet rested directly on an upper continuation of the tubular length, instead of the now proposed flukes for facilitating ventilation, it was observed that the rarefaction of oxygen in the interior space of the hotplate, during the heating process, increases the maximum length of the flame by nearly 50% but, nevertheless, the thermal performance is substantially decreased and, with it, the upper limit of temperature reached, to the point of not toasting the surface of the piece of food placed on the hotplate.

This same circumstance was repeated in other later experiments in which this same prototype was applied on gas and electric ceramic hobs. In this case the exchange of air could not take place underneath either, since the horizontal section of the base of the hotplate is completely flat, whereby it is easily deduced that the convection in the internal cylindrical enclosure decreases progressively during the heating, to the point where not only is the point of the meat having caramelised not reached but rather the latter ends up having a whitish colour, similar to that obtained by boiling.

The reason for this drastic reduction in the temperature lies in that, in the ring of triangular section which is adapted to the intersection between the upper end of the tubular length and the internal face of the ceramic sheet, a stagnation is produced initially in the micro-circulations of air, which extends progressively toward the upper central area of the interior space of the hotplate, to the point of reducing drastically the temperature attainable by the product deposited on the sheet, which reason justifies the intermediate upper openings between sheet and tubular length.

These aforementioned flukes, which are constituted in the supporting base of the ceramic sheet, are variable in number and not less than three, depending on the surface area occupied by the hotplate, and also this growing number of flukes has to be kept as far as possible equidistant. [00017] The most habitual embodiment in the heating elements of a ceramic hob of the domestic type, is circular and of 22 cm maximum diameter. In this case it is sufficient to apply four flukes at 90°.

Notwithstanding this being the most universal construction, circular and with the maximum diameter mentioned, industrial hobs are found having other dimensions and different configurations of the heating singular element, the same as other particular applications of the hotplate are possible, as will be seen.

The entirety or some of these flukes are facing some recesses, individual or in groups of two, arranged on the other side of the channel, and also these recesses reach a different level depending on their utility.

Thus, when this utility is that of securing the ceramic sheet, the level of the recess is higher and, also, it incorporates a perforation through which passes the screw of the wing nut or the like which provides this securing and, when necessary, makes possible the extraction of the sheet, for complete cleaning of the same and to clean also the channel for collection of the liquid residues and, also, the rest of the metallic frame.

While, in the case of the deepest recess, even below the level of the channel and having as lower limit the base supporting the hotplate, this recess acts as deposit for collection of these residues.

Alternatively or complementarily to the construction as hotplate is its use as a paella hob, without discarding its use for making stews, roasting vegetables, toasting bread, making crèpes and unsweetened pancakes or pizzas, frying lightly, au gratin, and much more. In these cases it has to be made clear that the exchange of air with the exterior is facilitated by the fact that the fluke does not have a perpendicular cut up to its upper horizontal edge, but instead it adopts a smoothly oblique form, so the hot air is forced out from the edge of the tubular length and toward the free vertex of the tab.

Likewise, the micro-circulation is arranged in the horizontal plane in small return flows of reduced elongation or in small vortexes. These micro-circulations are supplemented with other intermediate ones among those existing next to the flukes, variable in number depending on the number of flukes and the length of the free arc between them.

Logically the working temperature is defining and this is a function of the product to be cooked, since there is no limitation in temperature regarding the use of the ceramic sheet, which supports a constant temperature of 700° C.

The lower thermal limit is reached with the arrangement of these flukes, crenellated, so that the minimum free space is of a single micro-circulation, also variable depending on the length which each fluke has.

Among others, this would be the case of the paella hob, in which the relatively lower temperature and, above all, uniformity of the cooking is the main characteristic required and, therefore, the continuously crenellated arrangement is the most appropriate.

Regarding the collection of exuded or splashed liquids, the same as with melted fats, it should be clarified that the ceramic circular sheet projects a sufficient distance from the support on the flukes, by way of splashguard, whereby the radial thermal gradient also reaches a good distance from the internal area to the support.

The thermal differential is minimal, due to the convective heating provided by the air micro-currents of the aforementioned exchange, which carry the temperature to the very edge of the sheet.

Nevertheless, this elevation of the temperature does not affect the solidification temperature of the fat in any way, since the hotplate is working at a temperature far above that of melting, at around 350° C, in those cases in which no quantity whatever of vegetable oil is applied, which can degrade and negatively affect the piece of food. With this, the liquid fat runs along the edge of the sheet and ends up passing to the lower face, until meeting a multiplicity of small projections, by way of a granular grid formation on the lower face of the sheet, the convex surface of which becomes the generator of the drop of fat which has to drop into the channel of the hotplate.

Given the number of granules and the scant distance between them, on this face, the projecting external rim of the sheet becomes in this way the drip tray for fat from the splashguard so formed.

### DESCRIPTION OF THE DRAWINGS

The present descriptive specification is completed with a set of drawings, which illustrate the preferred embodiment without restricting the invention in any way.

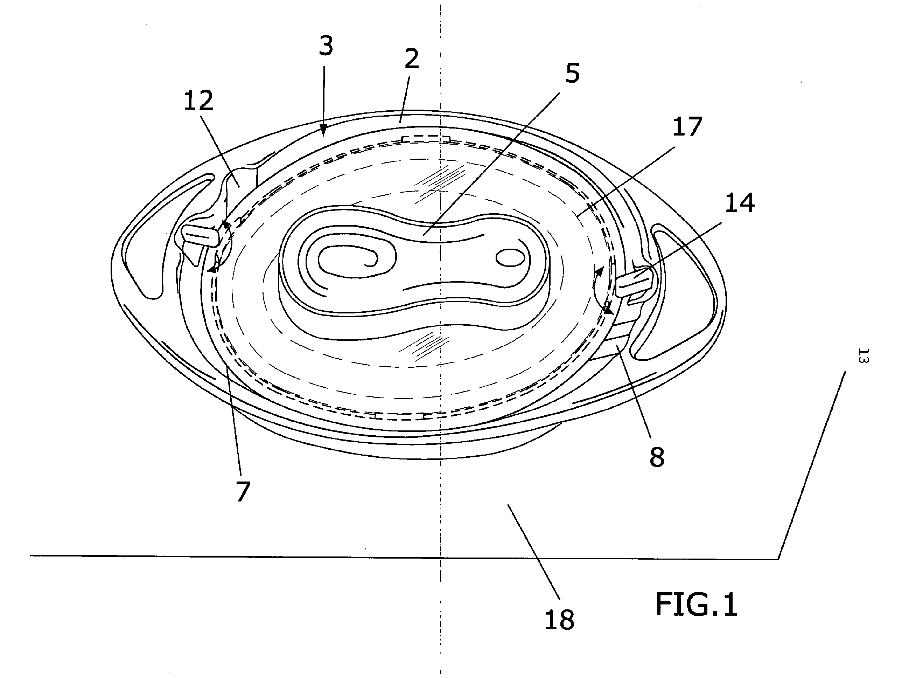

Figure 1 is a top view of the hotplate of the invention, according to the preferred embodiment.

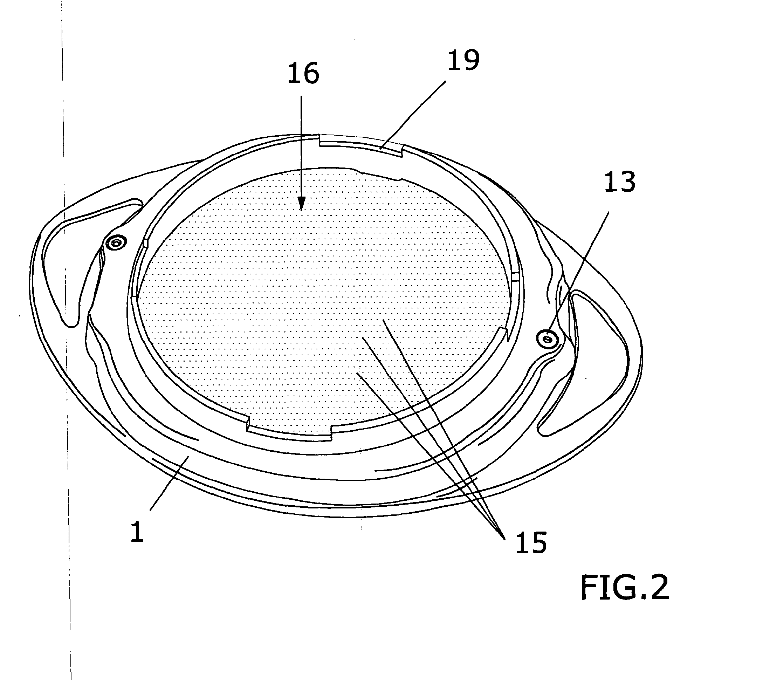

Figure 2 is the bottom view of this same embodiment.

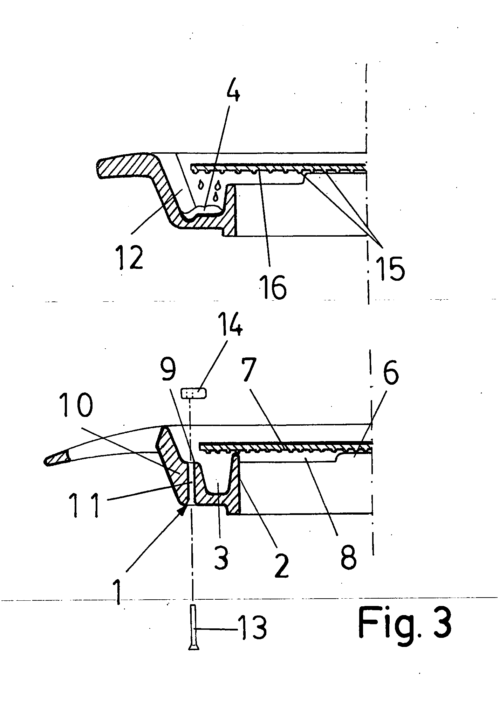

Figure 3 are two different sections of the elevation, in the area of two different recesses, and also show in an exploded view, the means of securing the ceramic sheet.

### PREFERRED EMBODIMENT OF THE INVENTION

In the light of the foregoing, the present invention relates to a ceramic hotplate, of among those applicable to electric or gas ceramic hobs, or to hobs provided with any type of energy source and without that coating material of the heating element, essentially characterised by its construction in cast metal frame, preferably in aluminium material and with one or several layers of PTFE non-stick coating, as well as in a single piece, even though the replacement is not discarded of the handles incorporated in the frame for other conventionally coupled independent ones, in stepped construction (1) which configures a tubular length (2), of circular section which acts as the internal side of a channel (3) for collection of the liquid residues (4) from the foodstuffs (5) cooked on the same, this tubular length (2) being extended upwards in a diversity of flukes -(6) , preferably trapezoidal and equidistant, on which rests a ceramic sheet (7) of 4 mm in thickness, leaving some intermediate circular ring sectors (8) which facilitate the exchange of the hottest air with the exterior from the space internal to the tubular length (2), facilitating greater uniformity of the temperature over the whole surface of the sheet (7), together with the sufficient increment of this, sufficient to achieve the surface toasting of the piece of food (5) placed on the sheet (7).

The flukes (6) of the tubular length (2), are variable in number, in its conventional embodiment of hotplate, either three at 120° or four at 90°, for heating elements (17) of a hob (18), of maximum diameter 22 cm, whilst for other applications like that of a paella hob and the other uses mentioned of heating at a lower temperature, the same as for the case of covering hobs equipped with multiple heating elements (4, 5 and, in very special cases, even more elements), they are mounted in such number that the sum of the space they occupy is equal to or even greater than the sum of the intermediate circular ring sectors (8). Nor is their application discarded for individual heating elements but with diameters greater than 22 cm and also others of much smaller diameter than the former.

A wide recess (12) which reaches a level below that of the channel (3), acts as deposit for gathering these residues, while others recesses (9), separate or grouped with the previous ones, according to the size of the hotplate or equivalent, are arranged on the other wall (10) of the channel (3) incorporating, also, a perforation (11) through which passes the Allen screw (13), with wing nut (14) or similar, which secures the sheet (7).

Cleaning the surface of the sheet (7) being sometimes indispensable, due to the mixtures of different foodstuffs which lead to undesired mixtures of residues having different flavours, this is carried out advantageously, without turning off the hob and without having to cool the hotplate, it being sufficient for this the use of a scraper directly thereon, whilst to clean the latter completely and, in passing, the channel (3) and the deposit (12) for gathering the liquid residues (4), the wing nut (14) or similar is loosened and the sheet (7) is extracted with ease.

The sheet (7) projects in cantilever with respect to the channel (3), leaving a free space up to the frame, which facilitates the scraping of the same while hot and the access of the liquid residues (4) of the foodstuffs (5) to some drop-shaped projections (15) on its lower face (16), act as drip-trays which collect and collaborate in the detachment which run along the edge of the sheet and pass to this lower face (16), and fall into the channel (3).

Alternatively or complementarily to the flukes (6), some recesses (19) can be included which make possible a lower recirculation of the hot air which, in this case, collaborate in maintaining the convection of the latter, both on a general level of the lower space and in specific points thereof. The same thing happens with the height of the tubular length (2), variable between 2 and 5 cm, in this case not only in terms of the use but also, of the diameter of the hotplate.

The essential nature of this invention is not altered by variations in materials, form, size and arrangement of the component elements, described in a non-restrictive manner, sufficient for an expert to proceed to its reproduction.

## Claims

1. Ceramic hotplate, of among the ceramic hotplates, essentially **characterised by** its construction in a cast metallic frame, preferably in aluminium material and with one or several layers of PTFE non-stick coating, as well as in a single piece or with its handles separate, in a stepped construction (1) which configures a tubular length (2), of circular section which acts as the internal side of a channel (3) for collection of the liquid residues (4) from the pieces of food (5) cooked thereon, this tubular length (2) being extended upwards in a diversity of flukes (6), preferably trapezoidal and equidistant, on which rests a ceramic sheet (7), leaving some intermediate circular ring sectors (8), for exchange of the hottest air with the exterior from the space internal to the tubular length (2).

2. Ceramic hotplate, according to the previous claim, **characterised in that**, for heating elements (17) of a conventional hob (18), the flukes (6) of the tubular length (2), are mounted in a variable number, either three at 120° or four at 90°, in its conventional hotplate embodiment.

3. Ceramic hotplate, according to the first claim, **characterised in that** for other applications like that of paella hob and the like or for multiple heating elements or with large diameters, the flukes (6) of the tubular length (2) are mounted in a number such that the sum of its occupied space is equal to or, even more than the sum of the intermediate circular ring sectors (8).

4. Ceramic hotplate according to the previous claims, **characterised in that** a broad recess (12) which reaches a level below that of the channel (3) acts as deposit for gathering these residues, while other recesses (9), separate or grouped with the previous ones, according to the size of the hotplate or equivalent, are arranged on the other wall (10) of the channel (3) incorporating, in addition, a perforation (11) through which passes the Allen screw (13), with wing nut (14) or the like, for securing the sheet (7) .

5. Ceramic hotplate, according to the previous claims, **characterised in that** the sheet (7) projects in cantilever with respect to the channel (3), leaving a free space up to the frame, for direct passage of residues from scraping and for access of the liquid residues (4) from the pieces of food (5), which run along the edge of the sheet and pass to its lower face (16), until reaching some drop-shaped projections (15) on its lower face (16), which act as drip trays, collecting these and collaborating in the detachment thereof, until the same fall into the channel (3).

6. Ceramic hotplate, according to the previous claims, **characterised in that** by making the surface cleaning of the sheet (7) independent, without halting the cooking, of the general cleaning in which, to clean the channel (3) and the collection deposit (12) of the liquid residues (4), the wing nut (14) is first loosened and the sheet (7) is extracted.

7. Ceramic hotplate, according to the previous claims, **characterised in that** alternatively or complementarily to the flukes (6), some recesses (19) are arranged for lower recirculation of the hot air which collaborate in maintaining the convection of the same, both at the general level of the lower space and in specific points of the interior of the hotplate.

8. Ceramic hotplate, according to the previous claims, **characterised in that** the height of the tubular length (2) is variable, between 2 and 5 cm.
